# EUROPÄISCHE PATENTSCHRIFT

(11) **EP 1 168 269 B1**
(45) Veröffentlichungstag und Bekanntmachung des Hinweises auf die Patenterteilung: **16.11.2005**
(21) Anmeldenummer: 01112167.0
(22) Anmeldetag: 17.05.2001
(51) Int. Cl.: G01V 8/14, G01V 8/22, G08B 13/184, G08B 13/196, G08B 15/00, F16P 3/14

(54) **Optoelektronische Schutzeinrichtung**
Surveillance optoelectronic device
Système de surveillance optoélectronique

(30) Priorität: 30.05.2000 DE 10026710
(43) Veröffentlichungstag der Anmeldung: 02.01.2002
(73) Patentinhaber: SICK AG, 79183 Waldkirch (DE)
(72) Erfinder: Wüstefeld, Martin, 79350 Sexau (DE); Meyer, Christof J., 79261 Gutach-Bleibach (DE)
(74) Vertreter: Manitz, Finsterwald & Partner GbR

(56) Entgegenhaltungen:
- DE-A- 19 644 278
- DE-U- 29 711 259
- DE-U- 29 714 438

## Beschreibung

Die Erfindung betrifft eine optoelektronische Schutzeinrichtung mit zumindest einer Kamera zur Aufnahme von Bildern eines Schutzbereiches und einer dieser zugeordneten Auswerteeinheit zur Verarbeitung der aufgenommenen Bilder und zur Auslösung einer Reaktion in Abhängigkeit von einem detektierten Ereignis. Weiterhin betrifft die Erfindung ein Verfahren zum Betrieb einer solchen Schutzeinrichtung.

Aus dem Stand der Technik sind unterschiedlichste Vorrichtungen zur Überwachung von Räumen bekannt. Einige dieser Vorrichtungen verwendet bildgebende Verfahren, um mittels einer Kamera ein Abbild des überwachten Raumes zu erzeugen, das dann mittels geeigneter Auswerteverfahren untersucht wird.

Die DE 196 44 278 beschreibt eine optische Schranke, die unter Verwendung einer einzigen CCD-Kamera die Funktion eines Lichtgitters erfüllt. Ein Schutzbereich der Vorrichtung ist durch einen in helle und dunkle Bereiche unterteilten Reflektor und ein optisches System aus mehreren Linsen und halbduchlässigen Spiegeln, die den Reflektor auf die CCD-Kamera flächendeckend abbilden, definiert. Durch ein in den Schutzbereich eindringendes Objekt wird eine Störung des Reflektorabbildes auf der Kamera hervorgerufen, die detektierbar ist.

Diese Vorrichtung erfordert ein optisches System, das jeweils speziell für die Ausmaße des Reflektors angefertigt werden muss.

Es ist daher eine Aufgabe der vorliegenden Erfindung, eine Vorrichtung gemäß DE 196 44 278 derart weiterzubilden, dass innerhalb des Gesichtsfelds einer Sensoreinrichtung bzw. einer Kamera Bereiche definiert werden können, in denen Objektbewegungen zugelassen werden, wobei gleichzeitig auch Bereiche definierbar sein sollen, in denen Objektbewegungen nicht zugelassen sind. Darüber hinaus soll es gemäß der vorliegenden Erfindung möglich werden, die Form der Bereiche, in denen Bewegungen zugelassen bzw. nicht zugelassen sind, auf einfache Weise ohne großen Aufwand zu verändern.

Die Lösung dieser Aufgabe erfolgt durch die Merkmale der unabhängigen Ansprüche 1 und 11.

Die Begrenzung einer Fläche oder eines Raumes mittels eines codierten Reflektors gestattet eine bedarfsgemäße, individuelle Festlegung eines klar definierten Schutzbereiches, dessen Verletzung, beispielsweise durch unbefugten Zugang einer Person oder Eingriff einer Hand, mittels der Kamera und der ihr nachgeschalteten Auswerteeinheit zuverlässig erfaßt werden kann. Die von der Strahlungsquelle ausgesandte und vom Reflektor reflektierte Strahlung erzeugt auf den von der Kamera generierten Bildern des Schutzbereiches ein deutlich erkenn- und identifizierbares und durch die konkret gewählte Codierung des Reflektors einstellbares Helligkeitsmuster, das durch die Auswerteeinheit zuverlässig auf Abweichungen von vorab gespeicherten Helligkeitsmustern untersucht werden kann. Bei der Vorsehung von mehreren Kameras kann jeder Kamera eine eigene Strahlungsquelle zugeordnet werden. Alternativ nutzen alle Kameras eine oder mehrere gemeinsame Strahlungsquellen, wobei grundsätzlich die Strahlungsquelle entfernt von den Kameras oder im Gehäuse von einer oder mehreren der Kameras vorgesehen sein kann.

Von Vorteil ist es, wenn der Reflektor ein Retroreflektor ist, d.h., ein Reflektor, der einfallende Lichtstrahlen annähernd unter ihrem Einfallswinkel reflektiert. Für diesen Fall ist die Strahlungsquelle bevorzugt im Kameragehäuse untergebracht, da sie sich möglichst nahe bei der Kamera befinden sollte, damit die Kamera die vom Retroreflektor mit nur geringen Abweichungen vom Einfallswinkel reflektierte Strahlung nachweisen kann.

Bevorzugt weist der Reflektor eine Reflektorfläche mit einem ein- oder zweidimensionalen Code auf. Von derartigen Codes gelieferte Bilder können beispielsweise in Verbindung mit einer geeigneten Auswertung Informationen über den Ort des Eintritts eines Objektes in den Schutzbereich oder über die Bewegungsrichtung des eintretenden Objektes liefern.

Bei einer weiteren Ausführungsform weist der Reflektor eine Reflektorfläche auf, die sich in zumindest einer Ebene erstreckt. Erstreckt sich der Reflektor zudem in einer dritten Dimension, können komplexe Raumgeometrien überwacht werden. Die Codierung des Reflektors kann alternativ oder zusätzlich auch über seine Umrißform erfolgen.

Bei einer Weiterbildung der Erfindung besteht der codierte Reflektor aus einer Reflektorfolie oder einem Reflektorband mit Strahlung wenigstens eines definierten Wellenlängenbereiches reflektierenden bzw. nicht reflektierenden Segmenten. Mit einem derart ausgestalteten Reflektor läßt sich auf einfache Weise ein von der Schutzeinrichtung zu überwachender Bereich begrenzen, indem beispielsweise die betreffenden Bereiche des Bodens einer Fabrikhalle mit einer solchen Folie bzw. einem solchen Band belegt, beklebt oder eingefaßt werden.

Besonders vorteilhaft ist es, daß die Auflösung des Schutzbereiches durch die Anzahl der codierten Segmente des Reflektors pro Längen- bzw. Flächeneinheit festlegbar ist. Auf diese Weise läßt sich die Auflösung über die Größe bzw. Breite von reflektierenden und nicht reflektierenden Segmenten des Reflektors beispielsweise auch nur bereichsweise beeinflussen, so daß bestimmte Bereiche mit höherer Auflösung als andere Bereiche überwacht werden können.

Es ist ferner möglich, durch die Segmente des Reflektors codierte Information zu decodieren und in Abhängigkeit von dieser Information ein Objekt im Schutzbereich zu orten und dementsprechend bestimmte Ereignisse auszulösen, wie beispielsweise eine Zustandsabfrage einer Maschine oder das Auslösen einer Sicherheitsmaßnahme.

Bei einem besonders bevorzugten Ausführungsbeispiel ist ein nicht zusammenhängender Schutzbereich durch zumindest zwei voneinander beabstandete, codierte Reflektoren definiert. Dadurch wird die Möglichkeit geboten, nicht zusammenhängende Schutzbereiche in einer Anzahl festzulegen, die die Anzahl der zur Überwachung eingesetzten Kameras übersteigt, wobei gezielt Bereiche ausgenommen werden können, deren Überwachung nicht erwünscht ist.

Ein besonders bevorzugtes Ausführungsbeispiel eines erfindungsgemäßen Reflektors weist sowohl Segmente auf, die Strahlung eines ersten definierten Wellenlängenbereiches reflektieren, als auch Segmente, die diese Strahlung nicht reflektieren und umfaßt ferner eine auf dem Reflektor angeordnete, die Strahlung des ersten definierten Wellenlängenbereiches transmittierende und Strahlung eines zweiten definierten Wellenlängenbereiches reflektierende Filterschicht. In Zusammenwirkung mit einer Strahlungsquelle, die Strahlung des ersten definierten Wellenlängenbereiches und Strahlung des zweiten definierten Wellenlängenbereiches aussendet, lassen sich Störstrahlungseinflüsse ausschließen, die sonst das Detektionsergebnis der Kamera beeinträchtigen könnten.

Bei einer vorteilhaften Weiterbildung der Schutzeinrichtung ist ein Autokorrelationssystem vorgesehen, das durch zulässige Vibrationen ausgelöste Verschiebungen des von der Kamera aufgenommenen Bildes rechnerisch oder mechanisch durch Bewegung der Optik ausgleicht. Über das Autokorrelationssystem lassen sich somit durch Vibration des Reflektors oder der Kamera bedingte Fehldetektionen ausschließen, sowie bewußt zugelassene Verschiebungen des Reflektors relativ zur Kamera definieren, die nicht als Alarm auslösende Ereignisse interpretiert werden sollen.

Weitere bevorzugte Ausführungsformen der Erfindung sind in den Unteransprüchen beschrieben. Die Erfindung wird nachfolgend anhand zweier Ausführungsbeispiele unter Bezugnahme auf die Figuren erläutert; in diesen zeigen:
- Fig. 1: einen Arbeitsbereich einer Werkzeugmaschine, der durch eine erfindungsgemäße Schutzeinrichtung überwacht wird, und
- Fig. 2: separate Fahrwegbereiche in einer Fabrikhalle, die mittels der erfindungsgemäßen Schutzeinrichtung überwacht werden.

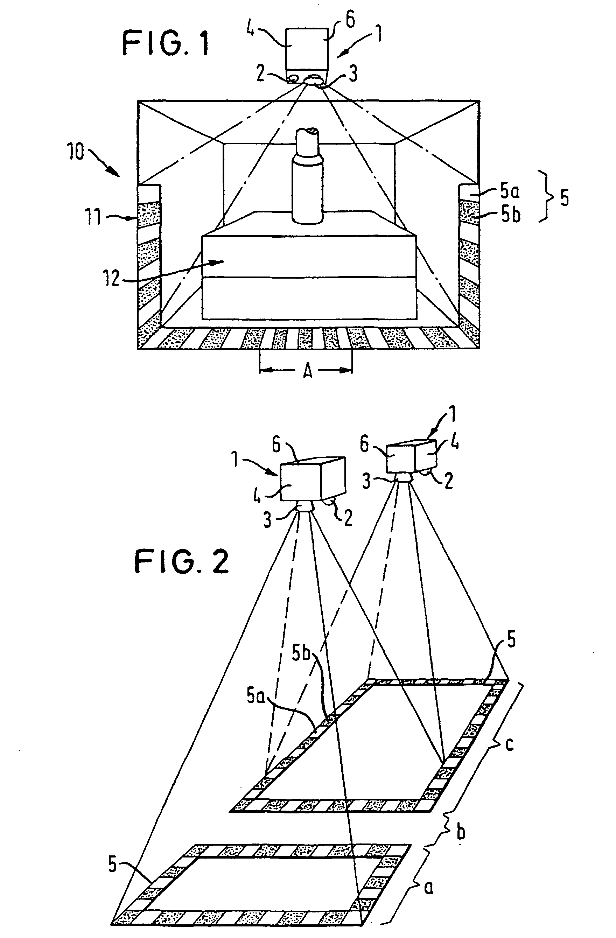

In Fig. 1 ist der Schutzbereich einer Werkzeugmaschine 10 gezeigt, die im vorliegenden Fall eine Presse mit einem Stanzwerkzeug 12 ist. Um einen unbefugten Eingriff in das Stanzwerkzeug 12 während des Betriebes zu erkennen und gegebenenfalls die Maschine sofort anzuhalten, wird der Arbeitsbereich 11 durch eine erfindungsgemäße Schutzeinrichtung überwacht.

Zu diesem Zweck ist ein Teil des Randes des Arbeitsbereiches 11 der Maschine 10 mit einem bandförmigen Reflektor 5 versehen, der reflektierende Segmente 5a und nicht reflektierende Segmente 5b aufweist, durch deren Abfolge und Größe eine Codierung festgelegt ist. In einem Bereich A sind die reflektierenden und nicht reflektierenden Segmente 5a, 5b des Reflektors 5 schmaler als außerhalb des Bereiches A.

Oberhalb des Arbeitsbereiches 11 befindet sich eine Beleuchtungs- und Kameraeinheit 1, die aus einer Kamera 3 mit integrierter Strahlungsquelle 2, einer Auswerteeinheit 4 sowie einem Autokorrelationssystem 6 besteht. Bei der Kamera 3 handelt es sich im vorliegenden Fall um eine CCD-Kamera, und die Strahlungsquelle 2 ist als Glühlampe ausgebildet. Die Kamera 3 und die Strahlungsquelle 2 sind in einem gemeinsamen Gehäuse integriert und arbeiten beide im sichtbaren Wellenlängenbereich, so daß die Glühlampe 2 auch gleichzeitig zur Beleuchtung des Arbeitsbereiches 11 dient.

Die Kamera 3 erfaßt die von dem Reflektor 5 reflektierte Strahlung, wobei die vom Bereich A reflektierte Strahlung ein feineres Reflexionsmuster erzeugt, so daß in diesem Bereich die Auflösung erhöht ist.

Der Raum zwischen der Linse der Kamera 3 und dem Reflektor 5 definiert den Schutzbereich der Schutzeinrichtung 1. Bei Eingriff einer Hand in den Schutzbereich wird das durch den Reflektor 5 hervorgerufene und von der Kamera 3 erfaßte codierte Reflexionsmuster gestört, da der Strahlengang des von der Glühlampe 2 ausgesandten Lichtes zum Reflektor 5 bzw. des vom Reflektor 5 zur Kamera 3 reflektierten Lichtes bereichsweise unterbrochen wird, so daß sich eine Differenz zwischen dem aktuell erfaßten Bild und einem in einem Bildspeicher der Auswerteeinheit 4 gespeicherten, ungestörten Referenzbild ergibt, woraufhin die Maschine 10 sofort zum Stillstand gebracht wird.

Ein Versuch, die Schutzeinrichtung zu überwinden, indem der Reflektor 5 in Richtung der Beleuchtungs- und Kameraeinheit 1 verschoben bzw. angehoben wird, um den Schutzbereich zu verkleinern und freien Zugang zum Werkzeug 12 zu erhalten, wird von der Auswerteeinheit 4 als Manipulationsversuch erkannt:
Die Auswerteeinheit 4 ist nämlich in der Lage, eine von der Kamera 3 erfaßte und durch ein Anheben des Reflektors bewirkte Änderung der Breite der reflektierenden bzw. nicht reflektierenden Segmente 5a, 5b des Reflektors zu detektieren, und quittiert eine solche Detektion mit einem Alarm und Stillsetzen der Maschine 10.

Die Autokorrelationseinheit 6 dient dazu, von der Maschine 10 auf den Reflektor 5 oder die Beleuchtungs- und Kameraeinheit übertragene Schwingungen aus den erfaßten Bildern rechnerisch zu eliminieren, um auf solchen, zulässigen Vibrationen beruhende Fehlalarme zu vermeiden. Eine von der Kamera 3 erfaßte geringe Parallelverschiebung des gesamten Bildes des Reflektors 5 wird also von der Auswerteeinheit 4 als erlaubte Änderung interpretiert.

Fig. 2 zeigt zwei voneinander getrennte Fahrwegbereiche a, c in einer Fabrikhalle, die durch zwei Beleuchtungs- und Kameraeinheiten 1 überwacht werden, wobei eine Beleuchtungs- und Kameraeinheit 1 den Fahrwegbereich a vollständig und den Fahrwegbereich c teilweise überwacht, und die andere Beleuchtungs- und Kameraeinheit 1 einen restlichen Teil des Fahrwegbereiches c überwacht. Ein Bereich b zwischen den Fahrwegbereichen a, c ist von der Überwachung ausgenommen, so daß sich z.B. Fabrikpersonal in diesem Bereich b frei bewegen kann.

Die Beleuchtungs- und Kameraeinheit 1 umfaßt eine Infrarot-Kamera 3, eine Infrarot-Strahlungsquelle 2, die Strahlung in zwei definierten, voneinander verschiedenen, für das menschliche Auge unsichtbaren Wellenlängenbereichen aussendet, eine Auswerteeinheit 4, sowie ein Autokorrelationssystem 6, die alle in einem gemeinsamen Gehäuse integriert sind.

Der Reflektor 5 besteht aus einer selbstklebenden Reflektorfolie, die am Boden der Fabrikhalle um den zu überwachenden Bereich herum verlegt ist. Der Reflektor 5 umfaßt gleich große reflektierende und nicht reflektierende Segmente 5a, 5b. Der Reflektor 5 ist ferner mit einer Filterschicht 5c versehen, die Strahlung von der Infrarot-Strahlungsquelle 2 in einem der beiden definierten Wellenlängenbereiche einschließlich eines Oberflächenreflexanteils vollständig zur Kamera 3 reflektiert, und Strahlung in dem anderen der beiden definierten Wellenlängenbereiche der Kamera abgesehen von einem Oberflächenreflexanteil transmittiert, so daß diese erst von den darunterliegenden reflektierenden Segmenten 5a zur Kamera 3 reflektiert wird. Durch Subtraktion zweier von der Kamera 3 bei Beleuchtung mit Strahlung jeweils einer der beiden definierten Wellenlängenbereiche aufgenommenen Bilder in der Auswerteeinheit 4 werden die Oberflächenreflexanteile aus dem Signal herausgefiltert. Dadurch werden Störstrahlungseinflüsse von anderen Strahlungsquellen als den in die Beleuchtungs- und Kameraeinheit 1 integrierten Strahlungsquellen 2, wie beispielsweise von heißen Maschinenteilen oder Werkstücken, die Oberflächenreflexe auf dem Reflektor 5 erzeugen, ausgeschlossen.

Das Autokorrelationssystem 6 gleicht durch Schwingungen der Beleuchtungs- und Kameraeinheit 1 bzw. des Bodens der Fabrikhalle verursachte Verschiebungen der einzelnen von der Kamera 3 aufgenommenen Bilder mechanisch durch Nachführen der Kameraoptik aus.

Bei Verletzung der überwachten Bereiche a, c, beispielsweise wenn Fabrikpersonal diese Bereiche a, c betritt oder wenn ein Fahrzeug (nicht dargestellt), das sich nur innerhalb der Bereiche a, c bewegen darf, diese Bereiche verläßt, wird der Strahlengang von der Infrarot-Strahlungsquelle 2 zum Reflektor 5 bzw. vom Reflektor 5 zur Infrarot-Kamera 3 unterbrochen. Die Kamera 3 nimmt ein Bild des gestörten Schutzbereiches auf, und die Auswerteeinheit 4 detektiert die Unterbrechung des Strahlenganges über Differenzbilderzeugung zwischen dem soeben aufgenommenen Bild und einem in einem Bildspeicher der Auswerteeinheit 4 gespeicherten Referenzbild. Daraufhin wird, wenn diese Störung als unzulässiges Ereignis klassifiziert wird, eine entsprechende Reaktion, wie beispielsweise ein Alarm, ausgelöst bzw. das Fahrzeug gestoppt.

Der Schutzbereich der Schutzeinrichtung kann ausgedehnt werden, indem zusätzliche Beleuchtungs- und Kameraeinheiten 1 installiert werden, die unter einem anderen Winkel auf denselben Reflektor 5 blicken, oder indem weitere Schutzbereiche durch Reflektoren 5 begrenzt werden.

Eine Einrichtung eines Schutzbereiches kann dadurch erfolgen, daß die Relativlage zwischen unterschiedlichen Beleuchtungs- und Kameraeinheiten 1 und dem Reflektor 5 verändert wird, so daß Ebenen mit unterschiedlichen räumlichen Lagen zwischen dem Reflektor 5 und der jeweiligen Beleuchtungs- und Kameraeinheit 1 aufgespannt werden, die den Schutzbereich individuell definieren. Es ist dann beispielsweise möglich, eine Überwachung nur in dem durch den Schnitt mehrerer Ebenen gebildeten Bereich vorzunehmen, oder auch genau diesen Bereich von einer Überwachung auszunehmen.

Der Schutzbereich kann auch verändert werden, indem der Reflektor 5 in einer weiteren Ebene angeordnet wird, so daß er sich z.B. über den Boden einer Fabrikhalle und anschließend entlang von Wandbereichen erstreckt.

Das wellenlängenselektive Filter kann im Reflektor 5 oder vor dem Reflektor 5 angeordnet sein und je nach Anwendungsfall unterschiedliche Charakteristiken aufweisen, wie beispielsweise die eines Kerbfilters oder eines Bandpaßfilters. Der Einsatz von Interferenzfiltern ist ebenfalls möglich. Die Filter können sowohl auf dem Reflektor 5 als auch am Kameraobjektiv vorgesehen sein.

### Bezugszeichenliste

- 1: Beleuchtungs- und Kameraeinheit
- 2: Strahlungsquelle
- 3: Kamera
- 4: Auswerteeinheit
- 5: Reflektor
- 5a: reflektierendes Segment
- 5b: nicht reflektierendes Segment
- 6: Autokorrelationssystem
- 10: Werkzeugmaschine
- 11: Arbeitsbereich
- 12: Stanzwerkzeug
- A: Reflektorbandbereich mit schmaleren Segmenten
- a: Schutzbereich
- b: von Überwachung ausgeschlossener Bereich
- c: Schutzbereich

## Patentansprüche

1. Optoelektronische Schutzeinrichtung für einen Raumbereich mit zumindest einer Kamera (3) zur Aufnahme von Bildern eines Schutzbereiches und einer dieser zugeordneten Auswerteeinheit (4) zur Verarbeitung der aufgenommenen Bilder und zur Auslösung einer Reaktion in Abhängigkeit von einem detektierten Ereignis, sowie zumindest einem Reflektor (5), der durch Segmente (5a, 5b) codiert ist, die Strahlung zumindest eines definierten Wellenlängenbereiches reflektieren bzw. nicht reflektieren, wobei der Raum zwischen Kamera (3) und Reflektor (5) einen Schutzbereich definiert,
**dadurch gekennzeichnet,**
**dass** zumindest eine der Kamera (3) zugeordnete, bevorzugt im Kameragehäuse vorgesehene Strahlungsquelle (2) zur Beleuchtung des Reflektors (5) vorhanden ist, und
**dass** der Schutzbereich zwischen Kamera (3) und Reflektor (5) innerhalb des von der Kamera (3) erfassten Raumbereichs zumindest einen Überwachungsbereich und zumindest einen von der Überwachung ausgeschlossenen Bereich definiert.

2. Schutzeinrichtung nach Anspruch 1,
**dadurch gekennzeichnet,**
**daß** der Reflektor (5) ein Retroreflektor ist.

3. Schutzeinrichtung nach Anspruch 1 oder 2,
**dadurch gekennzeichnet,**
**daß** der Reflektor (5) eine Reflektorfläche mit einem ein- oder zweidimensionalen Code aufweist.

4. Schutzeinrichtung nach einem der vorhergehenden Ansprüche,
**dadurch gekennzeichnet,**
**daß** der codierte Reflektor (5) eine Reflektorfläche aufweist, die sich in zumindest einer Ebene erstreckt.

5. Schutzeinrichtung nach einem der vorhergehenden Ansprüche,
**dadurch gekennzeichnet,**
**daß** der codierte Reflektor (5) aus einer Reflektorfolie oder einem Reflektorband mit Strahlung wenigstens eines definierten Wellenlängenbereiches reflektierenden bzw. nicht reflektierenden Segmenten (5a, 5b) besteht.

6. Schutzeinrichtung nach einem der vorhergehenden Ansprüche,
**dadurch gekennzeichnet,**
**daß** die Auflösung des Schutzbereiches durch die Anzahl der den Reflektor (5) codierenden Segmente (5a, 5b) pro Längen- bzw. Flächeneinheit festgelegt ist.

7. Schutzeinrichtung nach einem der vorhergehenden Ansprüche,
**dadurch gekennzeichnet,**
**daß** der Schutzbereich durch zumindest zwei voneinander beabstandete, codierte Reflektoren (5) begrenzt ist.

8. Schutzeinrichtung nach einem der vorhergehenden Ansprüche,
**dadurch gekennzeichnet,**
**daß** die Strahlungsquelle (2) Strahlung eines ersten definierten Wellenlängenbereiches und Strahlung eines zweiten definierten Wellenlängenbereiches aussendet.

9. Schutzeinrichtung nach Anspruch 8,
**dadurch gekennzeichnet,**
**daß** der Reflektor (5) Strahlung eines ersten definierten Wellenlängenbereiches reflektierende Segmente (5a) und diese Strahlung nicht reflektierende Segmente (5b) aufweist und eine auf dem Reflektor (5) angeordnete, die Strahlung des ersten definierten Wellenlängenbereiches transmittierende und Strahlung eines zweiten definierten Wellenlängenbereiches reflektierende Filterschicht umfaßt.

10. Schutzeinrichtung nach einem der vorhergehenden Ansprüche,
**dadurch gekennzeichnet,**
**daß** ein Autokorrelationssystem (6) vorgesehen ist, das durch zulässige Vibrationen ausgelöste Verschiebungen des von der Kamera (3) aufgenommenen Bildes rechnerisch oder mechanisch ausgleicht.

11. Verfahren zur Überwachung eines Raumbereiches,
wobei durch den Raum zwischen zumindest einer Kamera (3) und zumindest einem Reflektor (5) ein Schutzbereich definiert wird,
und die Kamera (3) reflektierte Strahlung wenigstens eines bestimmten Wellenlängenbereiches von dem Reflektor (5) erfaßt, der durch Segmente (5a, 5b) codiert ist, die von einer Strahlungsquelle (2) ausgesandte Strahlung wenigstens eines definierten Wellenlängenbereiches reflektieren bzw. nicht reflektieren
**dadurch gekennzeichnet,**
**daß** durch den Schutzbereich zwischen Kamera (3) und Reflektor (5) innerhalb des von der Kamera (3) erfassten Raumbereichs zumindest ein Überwachungsbereich und zumindest ein von der Überwachung ausgeschlossener Bereich definiert wird,
**daß** aus dem reflektierten Licht ein Bild des Überwachungsbereiches und des von der Überwachung ausgeschlossenen Bereiches erzeugt wird, und
**daß** eine Auswerteeinheit (4) das Bild des Schutzbereiches mit einem gespeicherten, zumindest bereichsweise den codierten Reflektor (5) zeigenden Referenzbild vergleicht, um Veränderungen im Schutzbereich durch Veränderungen der von dem Reflektor (5) reflektierten Strahlung zu detektieren und in Abhängigkeit von dem Detektionsergebnis eine Reaktion auszulösen.

12. Verfahren nach Anspruch 11,
**dadurch gekennzeichnet,**
**daß** die Kamera (3) von zumindest einer Strahlungsquelle (2) ausgesandte Strahlung eines ersten definierten Wellenlängenbereiches und eines zweiten definierten Wellenlängenbereiches empfängt, wobei die Strahlung des zweiten Wellenlängenbereiches von einer auf dem Reflektor (5) angeordneten Filterschicht reflektiert wird, und die Strahlung des ersten Wellenlängenbereiches von der Filterschicht transmittiert und durch darunterliegende reflektierende und nicht reflektierende Segmente (5a, 5b) reflektiert bzw. nicht reflektiert wird,
**daß** ein Bild des Schutzbereiches erzeugt wird, und
**daß** die Auswerteeinheit (4) zwei jeweils unterschiedlichen Wellenlängenbereichen zugeordnete Bilder voneinander subtrahiert, um Störstrahlungseinflüsse auszuschließen.

13. Verfahren nach Anspruch 11 oder Anspruch 12,
**dadurch gekennzeichnet,**
**daß** die Auswerteeinheit (4) Verschiebungen des Reflektors (5) bezüglich der Kamera (3) über eine Veränderung der Abstände zwischen hellen und dunklen Strukturen eines aufgenommenen Bildes in bezug auf ein Referenzbild erfaßt und bei Detektion einer unzulässigen Veränderung eine Reaktion, wie beispielsweise einen Alarm, auslöst.

14. Verfahren nach einem der Ansprüche 11 bis 13,
**dadurch gekennzeichnet,**
**daß** ein Autokorrelationssystem (6) durch zulässige Vibrationen der Kamera (3) oder des Reflektors (5) ausgelöste Verschiebungen des von der Kamera (3) aufgenommenen Bildes rechnerisch oder mechanisch korrigiert.

## Claims

1. An optoelectronic protective device for a spatial zone comprising at least one camera (3) for the taking of images of a protected zone and an evaluation unit (4) associated with it for the processing of the taken images and for the triggering of a reaction in dependence on a detected event as well as at least one reflector (5) which is coded by segments (5a, 5b) which respectively reflect or do not reflect the radiation of at least one defined wavelength range, with the space between the camera (3) and the reflector (5) defining a protected zone,
**characterised in that**
at least one radiation source (2) associated with the camera (3) and preferably provided in the camera housing is present for the illumination of the reflector (5); and
**in that** the protected zone between the camera (3) and the reflector (5) defines at least one monitored zone and at least one zone precluded from the monitoring inside the spatial zone detected by the camera (3).

2. A protective device in accordance with claim 1, **characterised in that** the reflector (5) is a retro-reflector.

3. A protective device in accordance with claim 1 or claim 2, **characterised in that** the reflector (5) has a reflector surface with a one-dimensional code or a two-dimensional code.

4. A protective device in accordance with any one of the preceding claims, **characterised in that** the coded reflector (5) has a reflector surface which extends in at least one plane.

5. A protective device in accordance with any one of the preceding claims, **characterised in that** the coded reflector (5) consists of a reflector foil or a reflector band comprising segments (5a, 5b) respectively reflecting or not reflecting radiation of at least one defined wavelength range

6. A protective device in accordance with any one of the preceding claims, **characterised in that** the resolution of the protected zone is set by the number of segments (5a, 5b) per length unit or surface unit coding the reflector (5).

7. A protective device in accordance with any one of the preceding claims, **characterised in that** the protected zone is bounded by at least two coded reflectors (5) spaced apart from one another.

8. A protective device in accordance with any one of the preceding claims, **characterised in that** the radiation source (2) transmits radiation of a first defined wavelength range and radiation of a second defined wavelength range.

9. A protective device in accordance with claim 8, **characterised in that** the reflector (5) has segments (5a) reflecting radiation of a first defined wavelength range and segments (5b) not reflecting this radiation and includes a filter coating arranged on the reflector (5) transmitting radiation of the first defined wavelength and reflecting radiation of a second defined wavelength range.

10. A protective device in accordance with any one of the preceding claims, **characterised in that** an auto-correlation system (6) is provided which mathematically or mechanically compensates shifts of the image taken by the camera (3) triggered by permitted vibrations.

11. A method for the monitoring of a monitored zone, wherein a protected zone is defined by the space between at least one camera (3) and at least one reflector (5), and the camera (3) detects reflected radiation of at least one specific wavelength range from the reflector (5) which is coded by segments (5a, 5b) which respectively reflect or do not reflect radiation of at least one defined wavelength range transmitted by a radiation source (2).
**characterised in that**
at least one monitored zone and at least one zone precluded from the monitoring is defined by the protected zone between the camera (3) and the reflector (5) inside the spatial zone detected by the camera (3);
**in that** an image of the monitored zone and of the zone precluded from the monitoring is generated from the reflected light; and
**in that** an evaluation unit (4) compares the image of the monitored zone with a stored reference image showing the coded reflector (5) at least regionally to detect changes in the monitored zone by changes of the radiation reflected by the reflector (5) and to trigger a reaction in dependence on the detection result.

12. A method in accordance with claim 11, **characterised in that** the camera (3) receives radiation of a first defined wavelength range and of a second defined wavelength range transmitted by at least one radiation source (2), with the radiation of the second wavelength range being reflected by a filter coating arranged on the reflector (5) and the radiation of the first wavelength range being transmitted by the filter coating and respectively being reflected or not reflected by reflecting and non-reflecting segments (5a, 5b) lying thereunder;
**in that** an image of the protected zone is generated; and
**in that** the evaluation unit (4) subtracts two images associated with respective different wavelength ranges from one another to preclude influences of interference radiation.

13. A method in accordance with claim 11 or claim 12, **characterised in that** the evaluation unit (4) detects shifts of the reflector (5) with respect to the camera (3) via a change of the spacings between light and dark structures of a taken image with respect to a reference image and triggers a reaction, for example an alarm, on the detection of an unpermitted change.

14. A method in accordance with any one of the claims 11 to 13, **characterised in that** an auto-correlation system (6) mathematically or mechanically corrects shifts of the image taken by the camera (3) triggered by permitted vibrations of the camera (3) or of the reflector (5).

## Revendications

1. Système optoélectronique de protection pour une zone d'espace, comportant au moins une caméra (3) pour prendre des images d'une zone de protection et une unité d'évaluation (4) associée à celle-ci pour traiter les images prises et pour déclencher une réaction en fonction d'un événement détecté, et comportant au moins un réflecteur (5) qui est codé par des segments (5a, 5b) qui réfléchissent ou ne réfléchissent pas le rayonnement d'au moins une plage définie de longueur d'ondes, l'espace entre la caméra (3) et le réflecteur (5) définissant une zone de protection,
**caractérisé en ce qu'**il est prévu au moins une source de rayonnement (2) associée à la caméra (3), agencée de préférence dans le boîtier de la caméra et destinée à éclairer le réflecteur (5), et **en ce que** la zone de protection entre la caméra (3) et le réflecteur (5) définit au moins une zone de surveillance et au moins une zone exclue de la surveillance à l'intérieur de la zone d'espace couverte par la caméra (3).

2. Système de protection selon la revendication 1, **caractérisé en ce que** le réflecteur (5) est un rétro-réflecteur.

3. Système de protection selon l'une ou l'autre des revendications 1 et 2, **caractérisé en ce que** le réflecteur (5) est une surface de réflexion présentant un code à une ou à deux dimensions.

4. Système de protection selon l'une des revendications précédentes, **caractérisé en ce que** le réflecteur codé (5) comprend une surface de réflexion qui s'étend dans au moins un plan.

5. Système de protection selon l'une des revendications précédentes, **caractérisé en ce que** le réflecteur codé (5) est constitué par une feuille de réflexion ou par une bande de réflexion à segments (5a, 5b) qui réfléchissent ou ne réfléchissent pas le rayonnement dans une plage définie de longueur d'ondes.

6. Système de protection selon l'une des revendications précédentes, **caractérisé en ce que** la résolution de la zone de protection est fixée par le nombre des segments (5a, 5b) codant le réflecteur (5) par unité de longueur ou de surface.

7. Système de protection selon l'une des revendications précédentes, **caractérisé en ce que** la zone de protection est délimitée par au moins deux réflecteurs codés (5) espacés l'un de l'autre.

8. Système de protection selon l'une des revendications précédentes, **caractérisé en ce que** la source de rayonnement (2) émet un rayonnement d'une première plage définie de longueur d'ondes et un rayonnement d'une seconde plage définie de longueur d'onde.

9. Système de protection selon la revendication 8, **caractérisé en ce que** le réflecteur (5) comprend des segments (5a) qui réfléchissent le rayonnement d'une première plage définie de longueur d'ondes et des segments (5b) qui ne réfléchissent pas ce rayonnement, ainsi qu'une couche filtrante qui est agencée sur le réflecteur (5) et qui transmet le rayonnement de la première plage définie de longueur d'ondes et qui réfléchit le rayonnement d'une seconde plage définie de longueur d'ondes.

10. Système de protection selon l'une des revendications précédentes, **caractérisé en ce qu'**il est prévu un système d'auto-corrélation (6) qui compense par voie de calcul ou mécanique des déplacements de l'image prise par la caméra (3) déclenchés par des vibrations admissibles.

11. Procédé pour surveiller une zone d'espace,
dans lequel au moins une zone de protection est définie par l'espace entre au moins une caméra (3) et au moins un réflecteur (5),
et la caméra (3) détecte le rayonnement réfléchi d'au moins une plage déterminée de longueur d'ondes provenant du réflecteur (5) qui est codé par des segments (5a, 5b) qui réfléchissent ou qui ne réfléchissent pas le rayonnement d'au moins une plage définie de longueur d'ondes émis par une source de rayonnement (2),
**caractérisé en ce que** la zone de protection entre la caméra (3) et le réflecteur (5) définit au moins une zone de surveillance et au moins une zone exclue de la surveillance à l'intérieur de la zone d'espace couverte par la caméra (3),
**en ce qu'**une image de la zone de surveillance et de la zone exclue de la surveillance est générée à partir de la lumière réfléchie, et
**en ce qu'**une unité d'évaluation (4) compare l'image de la zone de protection à une image de référence mémorisée montrant au moins localement le réflecteur codé (5), afin de détecter des modifications dans la zone de protection par des modifications du rayonnement réfléchi par le réflecteur (5) et de déclencher une réaction en fonction du résultat de détection.

12. Procédé selon la revendication 11, **caractérisé en ce que** la caméra (3) reçoit un rayonnement émis par au moins une source de rayonnement (2) d'une première plage définie de longueur d'ondes et d'une seconde plage définie de longueur d'ondes, le rayonnement de la seconde plage de longueur d'ondes est réfléchi par une couche filtrante agencée sur le réflecteur, et le rayonnement de la première plage de longueur d'ondes est transmis par la couche filtrante et est réfléchi ou n'est pas réfléchi par des segments (5a, 5b) réfléchissants et non réfléchissants situés au-dessous, **en ce qu'**une image de la zone de protection est générée et **en ce que** l'unité d'évaluation (4) soustrait l'une de l'autre deux images associées à deux plages respectives différentes de longueur d'ondes, afin d'exclure des influences de rayonnement parasite.

13. Procédé selon la revendication 11 ou selon la revendication 12, **caractérisé en ce que** l'unité d'évaluation (4) détecte des déplacements du réflecteur (5) par rapport à la caméra (3) par une modification des distances entre des structures claires et sombres d'une image prise par rapport à une image de référence, et lors de la détection d'une modification inadmissible, elle déclenche une réaction, par exemple une alarme.

14. Procédé selon l'une des revendications 11 à 13, **caractérisé en ce qu'**un système d'auto-corrélation (6) corrige par voie de calcul ou mécanique des déplacements de l'image prise par la caméra (3) déclenchés par des vibrations admissibles de la caméra (3) ou du réflecteur (5).
